# EUROPEAN PATENT APPLICATION

(11) **EP 3 300 817 A1**
(43) Date of publication of application: **04.04.2018**
(21) Application number: 17194002.6
(22) Date of filing: 29.09.2017
(51) Int. Cl.: B22F 1/00, B22F 3/00, B22F 3/11, B29C 64/165

(54) **THREE-DIMENSIONAL SHAPED-ARTICLE MANUFACTURING COMPOSITION AND METHOD FOR MANUFACTURING THREE-DIMENSIONAL SHAPED ARTICLE**

(30) Priority: 30.09.2016 JP 2016195127
(71) Applicant: Seiko Epson Corporation, Tokyo 160-8801 (JP)
(72) Inventor: ISHIDA, Masaya, Suwa-shi, Nagano 392-8502 (JP); OKAMOTO, Eiji, Suwa-shi, Nagano 392-8502 (JP); TSUNOYA, Akihiko, Suwa-shi, Nagano 392-8502 (JP)
(74) Representative: Miller Sturt Kenyon

(57) **Abstract**

A three-dimensional shaped-article manufacturing composition of the invention is a three-dimensional shaped-article manufacturing composition which is used for manufacturing of a three-dimensional shaped article. The composition described above includes a plurality of shaped-article forming grains forming a substantive portion of the three-dimensional shaped article; a void forming material forming voids in the three-dimensional shaped article; a solvent dispersing the shaped-article forming grains and the void forming material; and a binder dissolved in the solvent. The content of the void forming material is 5 to 50 parts by volume with respect to 100 parts by volume of the shaped-article forming grains.

## Description

### BACKGROUND

### 1. Technical Field

The present invention relates to a three-dimensional shaped-article manufacturing composition and a method for manufacturing a three-dimensional shaped article.

### 2. Related Art

Heretofore, manufacturing of a three-dimensional shaped article using a composition containing a plurality of grains (grains forming a substantive portion of a three-dimensional shaped article) has been carried out. In particular, in recent years, attention has been paid on a lamination method (three-dimensional shape forming method) in which after model data of a three-dimensional article is divided into many two-dimensional cross-sectional layer data (slice data), while cross-sectional members corresponding to the respective two-dimensional cross-sectional layer data are sequentially formed, the cross-sectional members are sequentially laminated to each other to form a three-dimensional shaped article (for example, see JP-A-2008-184622).

As long as the model data of a three-dimensional shaped article to be shaped is available, the lamination method is able to immediately form the swhaped article, and a mold is not required to be formed prior to the shape forming; hence, a three-dimensional shaped article can be formed rapidly at a low cost. In addition, since thin plate-like cross-sectional members are sequentially laminated to each other, for example, even if a complicated article having an inner structure is to be formed, the article can be formed as a one-piece shaped article without being formed from a plurality of components.

However, by the method described above, although a relatively dense three-dimensional shaped article can be obtained, a three-dimensional shaped article having a low density is difficult to obtain.

### SUMMARY

An advantage of some aspects of the invention is to provide a three-dimensional shaped-article manufacturing composition which can be used for manufacturing of a three-dimensional shaped article having a preferably adjusted density and is also to provide a method for manufacturing a three-dimensional shaped article, the method being capable of manufacturing a three-dimensional shaped article having a preferably adjusted density.

The advantage as described above can be achieved by the following invention.

A three-dimensional shaped-article manufacturing composition of the invention is a three-dimensional shaped-article manufacturing composition which is used for manufacturing of a three-dimensional shaped article. The composition described above comprises: a plurality of shaped-article forming grains forming a substantive portion of the three-dimensional shaped article; a void forming material forming voids in the three-dimensional shaped article; a solvent dispersing the shaped-article forming grains and the void forming material; and a binder dissolved in the solvent, and the content of the void forming material is 5 to 50 parts by volume with respect to 100 parts by volume of the shaped-article forming grains.

Accordingly, there may be provided a three-dimensional shaped-article manufacturing composition which can be used for manufacturing of a three-dimensional shaped article having a preferably adjusted density.

In the three-dimensional shaped-article manufacturing composition of the invention, the void forming material is preferably in the form of grains.

Accordingly, the shape of each void can be more preferably formed, and the distribution of the voids in a three-dimensional shaped article which is to be finally obtained can be more effectively prevented from being unfavorably varied.

In the three-dimensional shaped-article manufacturing composition of the invention, the void forming material preferably has an average grain diameter equal to or larger than that of the shaped-article forming grains.

Accordingly, for example, the conditions of the voids of the three-dimensional shaped article can be more preferably controlled. For example, the voids of the three-dimensional shaped article can be more reliably formed as preferable continuous holes.

In the three-dimensional shaped-article manufacturing composition of the invention, the average grain diameter of the void forming material is preferably 1 to 50 µm.

Accordingly, voids having preferable conditions can be more reliably formed, and while the productivity of the three-dimensional shaped article is further improved, the reliability and the mechanical strength of a three-dimensional shaped article to be manufactured can be further improved.

In the three-dimensional shaped-article manufacturing composition of the invention, the void forming material preferably includes at least one type selected from the group consisting of a polyamide, a poly(phenylene sulfide), a polyimide, and a poly(amide imide).

Accordingly, for example, while the void forming material is effectively prevented from being unfavorably deformed and/or degraded, for example, during storage of the three-dimensional shaped-article manufacturing composition, the productivity of the three-dimensional shaped article can be further improved. In addition, since those materials are easily available, an advantage in view of stable manufacturing of the three-dimensional shaped article can be obtained.

In the three-dimensional shaped-article manufacturing composition of the invention, the shaped-article forming grains preferably includes at least one of a metal material and a ceramic material.

Accordingly, for example, the texture (high quality feeling), the mechanical strength, and the durability of the three-dimensional shaped article can be further improved. In addition, the voids can be more preferably formed in the three-dimensional shaped article, and the dimensional accuracy of the three-dimensional shaped article can be more reliably improved.

A method for manufacturing a three-dimensional shaped article, according to the invention comprises: a layer forming step of forming a layer using the three-dimensional shaped-article manufacturing composition of the invention; a solvent removing step of removing the solvent contained in the layer; and a degreasing/void forming step of forming voids by removing the binder and the void forming material contained in the layer.

Accordingly, there may be provided a method for manufacturing a three-dimensional shaped article, the method being capable of manufacturing a three-dimensional shaped article having a preferably adjusted density.

According to the method for manufacturing a three-dimensional shaped article of the invention, in the degreasing/void forming step, a treatment which mainly aims to remove the binder and a treatment which mainly aims to remove the void forming material are preferably performed as treatments different from each other.

Accordingly, since the removal of the void forming material (formation of the voids) and a sintering treatment can be more preferably performed, the productivity of the three-dimensional shaped article can be further improved, and in addition, for example, since the shape of the void and the rate thereof occupied in the three-dimensional shaped article can be more preferably controlled, for example, the dimensional accuracy of a three-dimensional shaped article to be finally obtained can be further improved.

In the method for manufacturing a three-dimensional shaped article of the invention, after a series of steps including the layer forming step and the solvent removing step is repeatedly performed to form a laminate, the degreasing/void forming step is preferably performed on the laminate.

Accordingly, the productivity of the three-dimensional shaped article can be further improved, and in addition, for example, the shape of the void and the rate thereof occupied in the three-dimensional shaped article can be more preferably controlled. In addition, for example, the dimensional accuracy of the three-dimensional shaped article can be further improved.

In the method for manufacturing a three-dimensional shaped article of the invention, a plurality of types of three-dimensional shaped-article manufacturing compositions is preferably used.

Accordingly, for example, in accordance with the characteristics required for portions of the three-dimensional shaped article, materials may be used in combination, and hence, the characteristics of the entire three-dimensional shaped article can be further improved. In addition, the densities of the portions of the three-dimensional shaped article can be adjusted to be different from each other.

The method for manufacturing a three-dimensional shaped article of the invention preferably further comprises, after the degreasing/void forming step is performed, a bonding step of performing a bonding treatment to bond between the shaped-article forming grains.

Accordingly, for example, the mechanical strength of the three-dimensional shaped article can be particularly improved. In addition, the voids can be stabilized.

### BRIEF DESCRIPTION OF THE DRAWINGS

Embodiments of the invention will now be described by way of example only with reference to the accompanying drawings, wherein like numbers reference like elements.
Fig. 1 is a longitudinal cross-sectional view schematically showing a step (first-pattern forming step) of a method for manufacturing a three-dimensional shaped article according to a preferable embodiment of the invention.
Fig. 2 is a longitudinal cross-sectional view schematically showing a step (second-pattern forming step) of the method for manufacturing a three-dimensional shaped article according to the preferable embodiment of the invention.
Fig. 3 is a longitudinal cross-sectional view schematically showing a step (solvent removing step) of the method for manufacturing a three-dimensional shaped article according to the preferable embodiment of the invention.
Fig. 4 is a longitudinal cross-sectional view schematically showing a step (first-pattern forming step) of the method for manufacturing a three-dimensional shaped article according to the preferable embodiment of the invention.
Fig. 5 is a longitudinal cross-sectional view schematically showing a step (second-pattern forming step) of the method for manufacturing a three-dimensional shaped article according to the preferable embodiment of the invention.
Fig. 6 is a longitudinal cross-sectional view schematically showing a step (solvent removing step) of the method for manufacturing a three-dimensional shaped article according to the preferable embodiment of the invention.
Fig. 7 is a longitudinal cross-sectional view schematically showing a step of the method for manufacturing a three-dimensional shaped article according to the preferable embodiment of the invention.
Fig. 8 is a longitudinal cross-sectional view schematically showing a step (degreasing/void forming step) of the method for manufacturing a three-dimensional shaped article according to the preferable embodiment of the invention.
Fig. 9 is a longitudinal cross-sectional view schematically showing a step (support-portion removing step) of the method for manufacturing a three-dimensional shaped article according to the preferable embodiment of the invention.
Fig. 10 is a longitudinal cross-sectional view schematically showing a step (bonding step) of the method for manufacturing a three-dimensional shaped article according to the preferable embodiment of the invention.
Fig. 11 is a flowchart showing the method for manufacturing a three-dimensional shaped article according to the preferable embodiment of the invention.
Fig. 12 is a cross-sectional view schematically showing a preferable embodiment of a three-dimensional shaped-article manufacturing apparatus.

### DESCRIPTION OF EXEMPLARY EMBODIMENTS

Hereinafter, with reference to the accompanying drawings, preferable embodiments will be described in detail.

### METHOD FOR MANUFACTURING THREE-DIMENSIONAL SHAPED ARTICLE

First, a method for manufacturing a three-dimensional shaped article of the invention will be described.

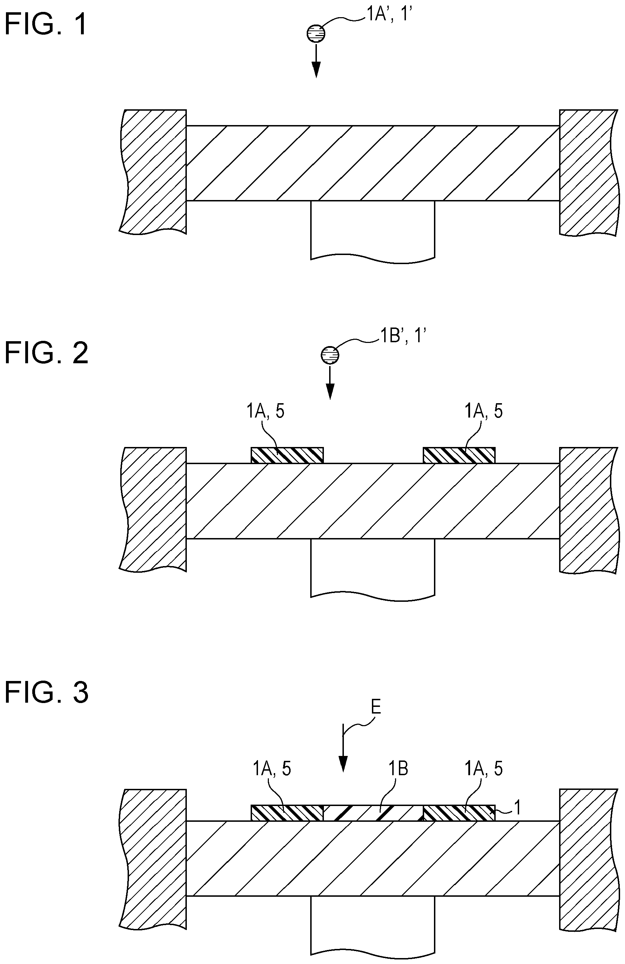

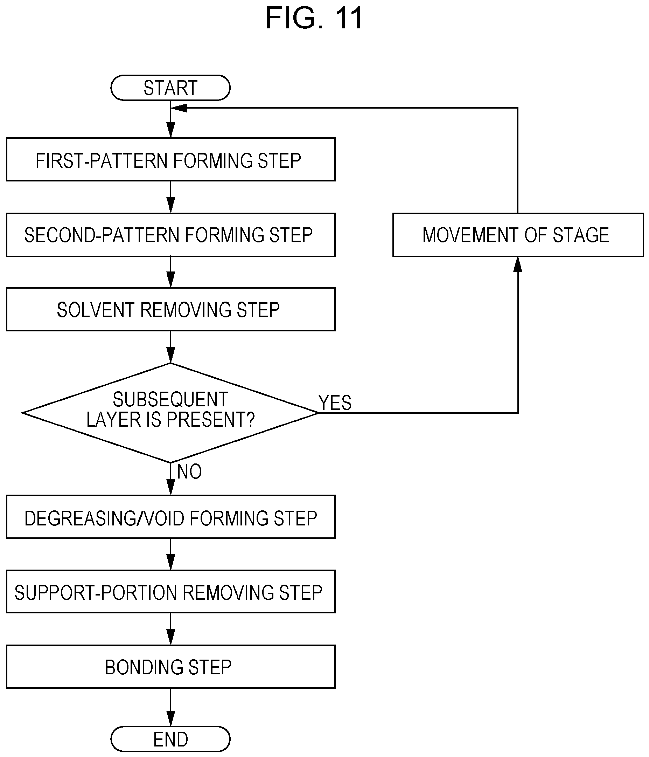

Figs. 1 to 10 are longitudinal cross-sectional views each schematically showing a step of a method for manufacturing a three-dimensional shaped article of a preferable embodiment of the invention. Fig. 11 is a flowchart showing the method for manufacturing a three-dimensional shaped article of the preferable embodiment of the invention.

A method for manufacturing a three-dimensional shaped article 10 of this embodiment comprises: a layer forming step of forming a layer 1 using a three-dimensional shaped-article manufacturing composition 1B' (three-dimensional shaped-article manufacturing composition 1B' including, besides a plurality of shaped-article forming grains, a solvent, and a binder, a void forming material at a predetermined rate) which will be described later in detail; a solvent removing step of removing the solvent contained in the layer 1; and a degreasing/void forming step of forming voids 3 by removing the binder and the void forming material contained in the layer 1.

Accordingly, the conditions of the voids 3 in a three-dimensional shaped article 10 to be finally obtained can be preferably adjusted, and a three-dimensional shaped article 10 having a preferably adjusted density can be manufactured.

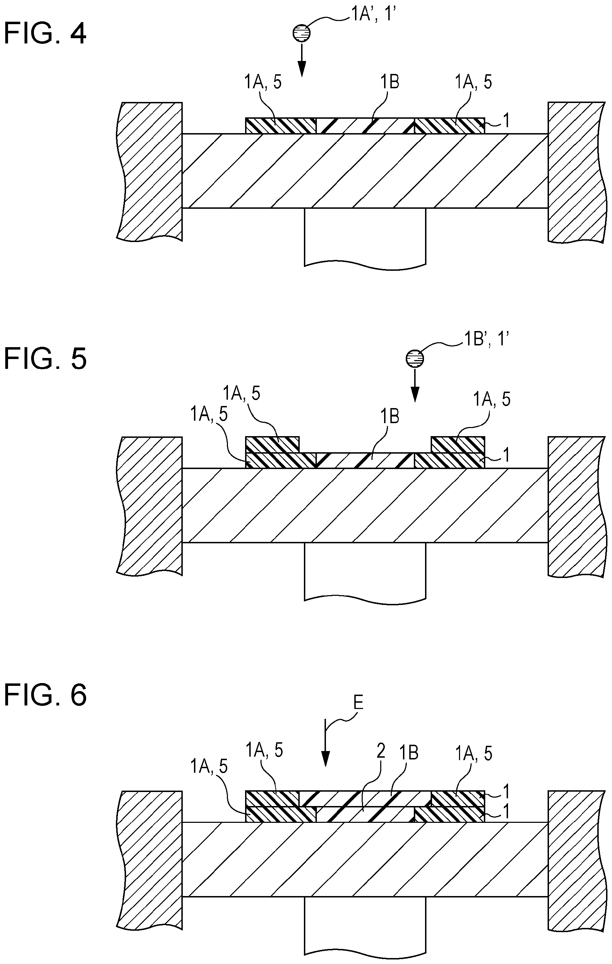

In particular, in this embodiment, the layer forming step is performed using the three-dimensional shaped-article manufacturing composition 1B' to be used to form a substantive portion (bond portion) 2 of the three-dimensional shaped article 10 and a support-portion forming composition 1A' to be used to form a support portion (support material) supporting a portion to be formed into the substantive portion 2, and the layer forming step comprises a first-pattern forming step (support-portion pattern forming step) (see Figs. 1 and 4) of forming a first pattern (support-portion pattern) 1A by ejecting the support-portion forming composition 1A' and a second-pattern forming step (substantive-portion pattern forming step) (see Figs. 2 and 5) of forming a second pattern (substantive-portion pattern) 1B by ejecting the three-dimensional shaped-article manufacturing composition 1B'.

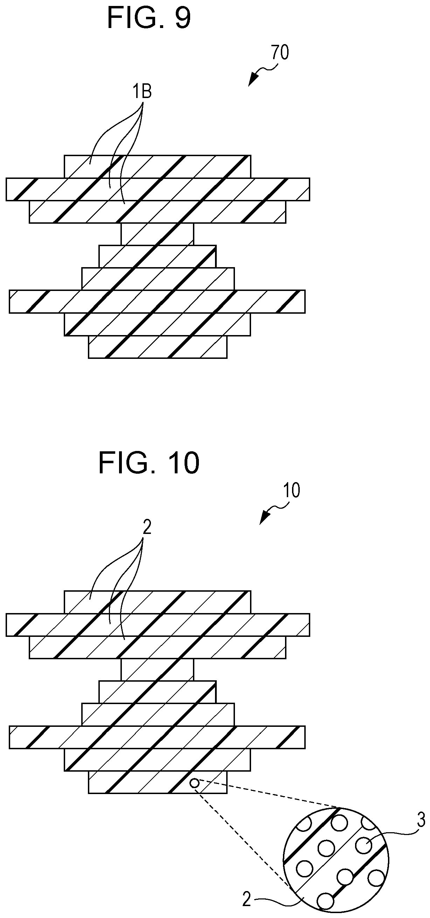

In addition, in this embodiment, on a degreased body 70 in which the voids 3 are formed, a bonding step (see Fig. 10) of bonding between the shaped-article forming grains contained in the degreased body 70 is performed.

Hereinafter, the individual steps will be described in detail.

### LAYER FORMING STEP

In the layer forming step, the layer 1 is formed using the three-dimensional shaped-article manufacturing composition 1B' functioning as a layer forming composition 1'.

In particular, in this embodiment, the layer forming step comprises the first-pattern forming step (see Figs. 1 and 4) of forming the first pattern 1A by ejecting the support-portion forming composition 1A' functioning as the layer forming composition 1' and the second-pattern forming step (see Figs. 2 and 5) of forming the second pattern 1B by ejecting the three-dimensional shaped-article manufacturing composition 1B' functioning as the layer forming composition 1'. In other words, the layer 1 is formed as a layer having the first pattern 1A and the second pattern 1B.

### FIRST-PATTERN FORMING STEP

In the first-pattern forming step, the first pattern 1A is formed by ejecting the support-portion forming composition 1A' (see Figs. 1 and 4).

As described above, since the first pattern 1A is formed by ejection of the support-portion forming composition 1A', even if a pattern has a fine and/or a complicated shape, the pattern can be preferably formed.

A method for ejecting the support-portion forming composition 1A' is not particularly limited, and for example, although an ink jet device or the like may be used, a dispenser is preferably used.

As described above, since the ejection of the support-portion forming composition 1A' is performed using a dispenser, even if the support-portion forming composition 1A' has a high viscosity, a preferable supply (ejection) can be performed, and after being brought into contact with a target portion, the support-portion forming composition 1A' can be more effectively prevented from sagging and the like. As a result, the dimensional accuracy of the three-dimensional shaped article 10 to be finally obtained can be further improved. In addition, since the support-portion forming composition 1A' having a high viscosity is used, a layer 1 having a relatively large thickness can be easily formed, and the productivity of the three-dimensional shaped article 10 can be further improved.

The viscosity of the support-portion forming composition 1A' in this step is preferably 100 to 1,000,000 mPa·s, more preferably 500 to 100,000 mPa·s, and further preferably 1,000 to 20,000 mPa·s.

Accordingly, for example, the ejection stability of the support-portion forming composition 1A' can be further improved, and at the same time, the layer 1 can be preferably formed to have an appropriate thickness, so that the productivity of the three-dimensional shaped article 10 can be further improved. In addition, the support-portion forming composition 1A' brought into contact with an adherend is more effectively prevented from excessively wetting and spreading, and the dimensional accuracy of the three-dimensional shaped article 10 to be finally obtained can be further improved.

In addition, in this specification, unless otherwise particularly noted, the viscosity indicates a value obtained by measurement using a rheometer at a shear rate of 10 [s⁻¹].

In this step, although the support-portion forming composition 1A' may be ejected to form either a continuous shape or a plurality of liquid droplets, a plurality of liquid droplets is preferably ejected.

Accordingly, for example, manufacturing of a three-dimensional shaped article 10 having a fine structure can be more preferably performed, and the dimensional accuracy of the three-dimensional shaped article 10 can be further improved.

When the support-portion forming composition 1A' is ejected in this step to form a plurality of liquid droplets, the volume of one liquid droplet to be ejected is preferably 1 to 2,000 pL and more preferably 10 to 500 pL.

Accordingly, for example, the manufacturing of the three-dimensional shaped article 10 having a fine structure can be more preferably performed, the dimensional accuracy of the three-dimensional shaped article 10 can be further improved, and at the same time, the productivity of the three-dimensional shaped article 10 can also be further improved.

For the manufacturing of the three-dimensional shaped article 10, as the support-portion forming composition 1A', a plurality of types of compositions may be used.

In addition, the support-portion forming composition 1A' will be described later in detail.

### SECOND-PATTERN FORMING STEP

In the second-pattern forming step, the second pattern 1B is formed by ejecting the three-dimensional shaped-article manufacturing composition 1B' (see Figs. 2 and 5).

As described above, when the second pattern 1B is formed by ejection of the three-dimensional shaped-article manufacturing composition 1B', even if a pattern has a fine and/or a complicated shape, the pattern can be preferably formed.

In particular, in this embodiment, the three-dimensional shaped-article manufacturing composition 1B' is ejected in a region surrounded by the first pattern 1A, so that the entire periphery of the second pattern 1B is brought into contact with the first pattern 1A.

Accordingly, the dimensional accuracy of the three-dimensional shaped article 10 to be finally obtained can be further improved.

A method for ejecting the three-dimensional shaped-article manufacturing composition 1B' is not particularly limited, and for example, although an ink jet device or the like may be used, a dispenser is preferably used.

As described above, since the ejection of the three-dimensional shaped-article manufacturing composition 1B' is performed using a dispenser, even if the three-dimensional shaped-article manufacturing composition 1B' has a high viscosity, a preferable supply (ejection) can be performed, and after being brought into contact with a target portion, the three-dimensional shaped-article manufacturing composition 1B' can be more effectively prevented from sagging and the like. As a result, the dimensional accuracy of the three-dimensional shaped article 10 to be finally obtained can be further improved. In addition, by the use of the three-dimensional shaped-article manufacturing composition 1B' having a high viscosity, a layer 1 having a relatively large thickness can be easily formed, and the productivity of the three-dimensional shaped article 10 can be further improved.

The three-dimensional shaped-article manufacturing composition 1B' may be, for example, in the form of a paste.

The viscosity of the three-dimensional shaped-article manufacturing composition 1B' in this step is preferably 100 to 1,000,000 mPa·s, more preferably 500 to 100,000 mPa·s, and further preferably 1,000 to 20,000 mPa·s.

Accordingly, for example, the ejection stability of the three-dimensional shaped-article manufacturing composition 1B' can be further improved, and the layer 1 having an appropriate thickness is preferably formed, so that the productivity of the three-dimensional shaped article 10 can be further improved. In addition, since the three-dimensional shaped-article manufacturing composition 1B' brought into contact with an adherent is more effectively prevented from excessively wetting and spreading, the dimensional accuracy of the three-dimensional shaped article 10 to be finally obtained can be further improved.

In this step, although the three-dimensional shaped-article manufacturing composition 1B' may be ejected to form either a continuous shape or a plurality of liquid droplets, a plurality of liquid droplets is preferably formed by ejection.

Accordingly, for example, the manufacturing of the three-dimensional shaped article 10 having a fine structure can be more preferably performed, and the dimensional accuracy of the three-dimensional shaped article 10 can be further improved.

When the three-dimensional shaped-article manufacturing composition 1B' is ejected to form a plurality of liquid droplets in this step, the volume of one liquid droplet to be ejected is preferably 1 to 2,000 pL and more preferably 10 to 500 pL.

Accordingly, for example, the manufacturing of the three-dimensional shaped article 10 having a fine structure can be more preferably performed, the dimensional accuracy of the three-dimensional shaped article 10 can be further improved, and at the same time, the productivity of the three-dimensional shaped article 10 can also be further improved.

In the manufacturing of the three-dimensional shaped article 10, as the three-dimensional shaped-article manufacturing composition 1B', a plurality of types of compositions may be used.

Accordingly, for example, in accordance with the characteristics required for each portion of the three-dimensional shaped article 10, materials may be used in combination, and the characteristics (including the appearance, the functionality (such as elasticity, toughness, heat resistance, and corrosion resistance), and the like) of the entire three-dimensional shaped article 10 can be further improved. In addition, when a plurality of types of three-dimensional shaped-article manufacturing compositions 1B' having different conditions, such as the content of the void forming material, is used, for example, the densities of the portions of the three-dimensional shaped article 10 to be finally obtained may be adjusted to be different from each other. In particular, a porous material and a dense material may be preferably bonded to each other.

In the case in which as the three-dimensional shaped-article manufacturing composition 1B', a plurality of types of compositions is used, as at least one of the above compositions, a three-dimensional shaped-article manufacturing composition of the invention which will be described later in detail may be used, and at least one composition other than the above three-dimensional shaped-article manufacturing composition of the invention may be used in combination therewith.

In addition, the three-dimensional shaped-article manufacturing composition 1B' will be described later in detail.

Since the first-pattern forming step and the second-pattern forming step as described above are performed, the layer 1 including the first pattern 1A and the second pattern 1B can be formed. In other words, the layer forming step includes the first-pattern forming step and the second-pattern forming step.

Although the thickness of the layer 1 formed using the support-portion forming composition 1A' and the three-dimensional shaped-article manufacturing composition 1B' is not particularly limited, a thickness of 10 to 500 µm is preferable, and a thickness of 20 to 250 µm is more preferable.

Accordingly, while the productivity of the three-dimensional shaped article 10 is improved, the dimensional accuracy of the three-dimensional shaped article 10 can be further improved.

### SOLVENT REMOVING STEP

In the solvent removing step, the solvent contained in the layer 1 is removed (see Figs. 3 and 6).

As a method for removing a solvent, for example, there may be mentioned heating of the layer 1, irradiation of infrared rays on the layer 1, placement of the layer 1 at a reduced pressure, or supply of a gas, such as dry air, having a low content of a liquid component (such as a gas having a relative humidity of 30% or less). In addition, at least two of those methods mentioned above may be used in combination.

In the structure shown in the drawing, thermal energy E is supplied from a heating device, so that the layer 1 is heated.

In addition, in this embodiment, the solvent removing step is sequentially performed for each layer 1 (is not simultaneously performed for the layers 1). That is, the solvent removing step is included in a series of repeating steps including the layer forming step.

Accordingly, a relatively large amount of the solvent can be more effectively prevented from unfavorably remaining in a laminate 50 including the layers 1. As a result, the reliability of the three-dimensional shaped article 10 to be finally obtained can be particularly improved.

In addition, in this step, the solvent contained in the layer 1 is not required to be fully removed. Even in the case as described above, a remaining solvent can be sufficiently removed in a subsequent step.

The content of the solvent in the layer 1 after this step is preferably 0.1 to 25 percent by mass and more preferably 0.5 to 20 percent by mass of the layer.

Accordingly, unfavorable deformation in association with rapid evaporation (such as bumping) of the solvent in a subsequent step can be effectively prevented, and the dimensional accuracy of the three-dimensional shaped article 10 to be finally obtained can be more reliably improved. In addition, the reliability of the three-dimensional shaped article 10 can be further improved, and at the same time, the productivity of the three-dimensional shaped article 10 can also be further improved.

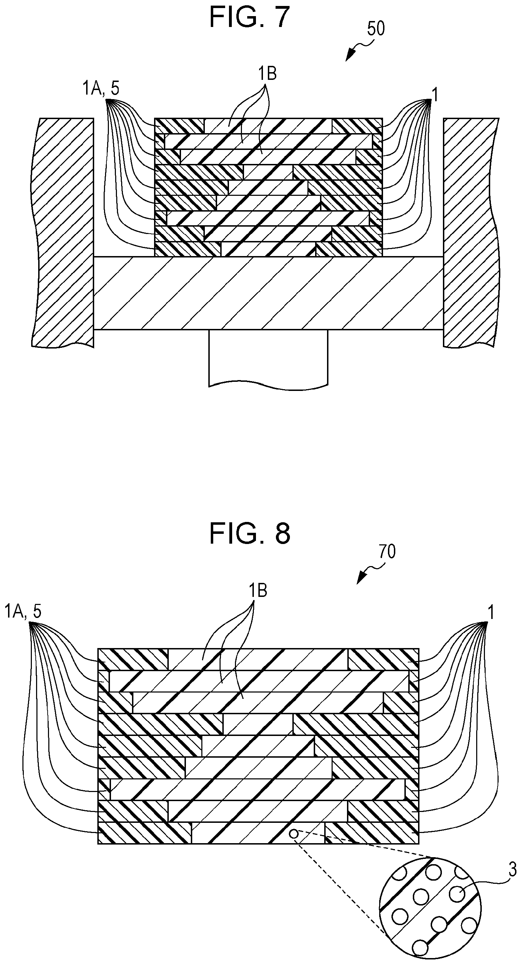

In the manufacturing of the three-dimensional shaped article 10, a series of steps including the layer forming step and the solvent removing step is repeated predetermined times, so that the laminate 50 in which the layers 1 are laminated to each other is obtained (see Fig. 7).

That is, first, it is judged whether a new layer 1 is to be formed or not on a layer 1 which is previously formed, and when judged to be formed, the new layer 1 is formed, and when the new layer 1 is judged not to be formed, a step which will be described later in detail is performed on the laminate 50.

### DEGREASING/VOID FORMING STEP

In the degreasing/void forming step, the binder and the void forming material contained in the layer 1 are removed, so that the degreased body 70 in which the voids 3 are provided is obtained (see Fig. 8).

A volume rate of the voids 3 can be easily and reliably adjusted, for example, by the content of the void forming material in the three-dimensional shaped-article manufacturing composition 1B'.

As a result, the density (void rate) of the three-dimensional shaped article 10 to be finally obtained can be preferably adjusted. For example, the three-dimensional shaped article 10 can be easily and reliably formed to selectively have a density of from a relatively high level to a low level. By the use of the void forming material, besides the control of the void rate, for example, the control of the shape of the void, the pore diameter, and the like can also be preferably performed, and in addition, the voids (pores) may also be preferably formed as continuous holes.

In addition, in this embodiment, after the laminate 50 is obtained by repeating a series of steps including the layer forming step and the solvent removing step, the degreasing/void forming step is performed on the laminate 50.

Accordingly, the productivity of the three-dimensional shaped article 10 can be further improved, and in addition, the shape of the void 3, the rate thereof occupied in the three-dimensional shaped article 10, and the like can also be more preferably controlled. In more particular, for example, unfavorable intrusion of the shaped-article forming grains into the void 3 thus formed can be effectively prevented, and for example, the density of the three-dimensional shaped article 10 can be more preferably controlled. In addition, since the laminate 50 processed in this step has a sufficiently low content of the solvent by the solvent removing step described above, unfavorable deformation (such as deformation in association with the rapid evaporation of the solvent) in this step can be effectively prevented. Hence, for example, the dimensional accuracy of the three-dimensional shaped article 10 to be finally obtained can be further improved.

In addition, in the layer forming step (second-pattern forming step), when a plurality of types of three-dimensional shaped-article manufacturing compositions 1B' having different conditions, such as the content of the void forming material, is used, for example, the portions of the three-dimensional shaped article 10 to be finally obtained can be adjusted to have different densities from each other.

In this step, the void forming material may also be removed by decomposition, sublimation, or the like. In addition, the removal of the void forming material may also be performed, for example, by dissolution thereof in a solvent.

Although the degreasing/void forming step may be performed by any method as long as the binder and the void forming material contained in the layer 1 are removed to form the voids 3, in this embodiment, as the degreasing/void forming step, besides a heat treatment performed in an oxidizing atmosphere containing oxygen, a nitric acid gas, or the like, a heat treatment may be performed in a non-oxidizing atmosphere, such as a vacuum or a reduced-pressure atmosphere (such as 1.33×10⁻⁴ to 13.3 Pa), or in a gas atmosphere, such as a nitrogen gas or an argon gas atmosphere.

In addition, although a treatment temperature of the degreasing/void forming step (heat treatment) is not particularly limited, a temperature of 100°C to 750°C is preferable, and a temperature of 150°C to 600°C is more preferable.

Accordingly, while unfavorable deformation of the laminate 50 and the degreased body 70 in the degreasing/void forming step is more reliably prevented, voids 3 having a desired shape can be more reliably formed, and a degreasing treatment and a void forming treatment can be more efficiently performed. As a result, a three-dimensional shaped article 10 having a more excellent dimensional accuracy can be manufactured with a more excellent productivity.

In addition, a treatment time (heat treatment time) of the degreasing/void forming step (heat treatment) is preferably 0.5 to 20 hours and more preferably 1 to 10 hours.

Accordingly, the productivity of the three-dimensional shaped article 10 can be further improved. In addition, a remaining rate of the binder and the void forming material in the degreased body 70 can be sufficiently decreased, and the reliability of the three-dimensional shaped article 10 to be finally obtained can be further improved.

In addition, in accordance with various purposes (purposes, such as a decrease in treatment time and an improvement in accuracy of the shape of the void 3), the degreasing/void forming step may be performed through a plurality of steps (stages).

For example, in the degreasing/void forming step, a treatment which primarily aims to remove the binder and a treatment which primarily aims to remove the void forming material may be performed as the treatments different from each other. In other words, the degreasing/void forming step may include a degreasing step which primarily aims to remove the binder and a void forming step which primarily aims to remove the void forming material.

Accordingly, the removal of the void forming material (formation of the voids 3) and a sintering treatment can be more preferably performed, the productivity of the three-dimensional shaped article 10 can be further improved, and at the same time, for example, the shape of the void 3 and the rate thereof occupied in the three-dimensional shaped article 10 can be more preferably controlled, so that, for example, the dimensional accuracy of the three-dimensional shaped article 10 to be finally obtained can be further improved.

In this case, for example, a method in which the degreasing is performed at a low temperature and a high temperature in a first half and a second half, respectively, may be used.

In addition, when the void forming material is decomposed, besides the heat treatment, for example, a treatment using a chemical agent which selectively decomposes the void forming material may also be performed.

### SUPPORT-PORTION REMOVING STEP

In addition, after the degreasing/void forming step is performed, the support portion 5 is removed. Accordingly, the degreased body 70 having the voids 3 is recovered (see Fig. 9).

As a particular method of this step, for example, there may be mentioned a method in which the support portion 5 is removed by sweeping with a brush or the like, a method in which the support portion 5 is removed by suction, a method in which a gas, such as air, is blown, a method in which a liquid, such as water, is applied (such as a method in which a composite of the support portion 5 and the degreased body 70 obtained as described above is immersed in a liquid or a method in which a liquid is sprayed), or a method in which vibration, such as ultrasonic wave vibration, is applied. In addition, at least two types of methods selected from those mentioned above may be used in combination.

In addition, the support portion 5 may be removed using a liquid into which at least a part of the support portion 5 is dissolved or may be removed by decomposition thereof using a chemical reaction.

### SINTERING STEP (BONDING STEP)

In this embodiment, after the degreasing/void forming step is performed, a sintering step is performed which functions as a bonding step of performing a bonding treatment to bond between the shaped-article forming grains.

Accordingly, the shaped-article forming grains contained in the degreased body 70 are bonded (sintered) to each other to form the bond portion (substantive portion) 2, so that the three-dimensional shaped article 10 as the sintered body is obtained (see Fig. 10).

Since the bond portion 2 is formed as described above, the three-dimensional shaped article 10 is formed of the shaped-article forming grains tightly bonded to each other, and hence, for example, the mechanical strength of the three-dimensional shaped article 10 can be particularly improved. In addition, since the bond portion 2 is formed, the voids 3 are stabilized.

In addition, even when the binder and/or the void forming material remains after the above steps are performed, by the bonding treatment (sintering treatment), the binder and/or the void forming material can be reliably removed. As a result, the binder and/or the void forming material can be prevented from unfavorably remaining in the three-dimensional shaped article 10, and the reliability of the three-dimensional shaped article 10 can be improved.

In particular, in this embodiment, the bonding step is performed on the laminate (degreased body 70) including the layers 1.

Accordingly, the productivity of the three-dimensional shaped article 10 can be further improved.

The sintering step is performed by a heat treatment.

The heating in the sintering step is preferably performed at a temperature equal to or lower than the melting point of a constituent material of the shaped-article forming grains which form the degreased body 70.

Accordingly, while the shape of the laminate is not destroyed, the bonding between the grains can be more efficiently performed.

The heat treatment in the sintering step is generally performed at a temperature higher than that of the heat treatment in the degreasing/void forming step.

When the melting point of the constituent material of the shaped-article forming grains is represented by Tm [°C], the heating temperature in the sintering step is preferably (Tm-200)°C to (Tm-50)°C and more preferably (Tm-150)°C to (Tm-70)°C.

Accordingly, the bonding between the shaped-article forming grains can be more efficiently performed by a heat treatment for a shorter time, and unfavorable deformation of the degreased body 70 in the sintering step can be more effectively prevented, so that the dimensional accuracy of the three-dimensional shaped article 10 can be further improved.

In addition, when the shaped-article forming grains contain a plurality of components, as the melting point described above, the melting point of a component having a largest content may be used.

Although the heating time in the sintering step is not particularly limited, a time from 30 minutes to 5 hours is preferable, and a time from 1 to 3 hours is more preferable.

Accordingly, while the bonding between the shaped-article forming grains is sufficiently performed, unfavorable deformation in this step can be more effectively prevented, the mechanical strength and the dimensional accuracy of the three-dimensional shaped article 10 can also be simultaneously achieved at a higher level, and furthermore, the productivity of the three-dimensional shaped article 10 can be further improved.

In addition, although the atmosphere in the sintering treatment is not particularly limited, for example, a non-oxidizing atmosphere, such as a vacuum atmosphere or a reduced-pressure atmosphere (such as a pressure of 1.33×10⁻⁴ to 133 Pa) or an inert gas atmosphere containing a nitrogen gas or an argon gas may be used, and if needed, a reducing gas atmosphere containing hydrogen or the like may also be used.

In addition, the sintering step may be performed by two stages or more. Accordingly, the efficiency of the sintering is improved, and the sintering (firing) can be performed for a shorter treatment time.

In addition, the sintering step may be continuously performed from the degreasing/void forming step described above.

Accordingly, the degreasing/void forming step may also be performed as a presintering step, and when being pre-heated, the degreased body 70 can be more reliably sintered.

In addition, in accordance with various purposes (such as a purpose to shorten the firing time), the sintering step may be performed using a plurality of steps (stages). In this case, for example, there may be mentioned a method in which firing is performed at a low temperature and a high temperature in a first half and a second half, respectively, or a method in which a firing at a low temperature and a firing at a high temperature are repeatedly performed.

According to the manufacturing method of the invention described above, the three-dimensional shaped article having a preferably adjusted density can be effectively manufactured.

The void rate of the three-dimensional shaped article 10 is preferably 10 to 55 percent by volume, more preferably 15 to 52 percent by volume, and further preferably 20 to 50 percent by volume.

In the past, the three-dimensional shaped article having a high void rate as described above is difficult to obtain. Hence, when the void rate of the three-dimensional shaped article 10 is within the range described above, the effect of the invention can be more advantageously achieved. In addition, when the void rate of the three-dimensional shaped article 10 is within the range described above, the mechanical strength, the stability of the shape, and the like of the three-dimensional shaped article 10 can be particularly improved.

The manufacturing method of the three-dimensional shaped article as described above is shown by a flowchart of Fig. 11.

### LAYER FORMING COMPOSITION

Next, a layer forming composition to be used for the manufacturing method of the three-dimensional shaped article will be described.

In this embodiment, as the layer forming composition 1', the three-dimensional shaped-article manufacturing composition 1B' and the support-portion forming composition 1A' are used.

### THREE-DIMENSIONAL SHAPED-ARTICLE MANUFACTURING COMPOSITION

First, the three-dimensional shaped-article manufacturing composition 1B' functioning as the layer forming composition 1' to be used for manufacturing of the three-dimensional shaped article 10 will be described.

The three-dimensional shaped-article manufacturing composition 1B' is a composition to be used for the formation of the substantive portion 2 and the voids 3 (formation of the second pattern 1B).

In the manufacturing of the three-dimensional shaped article 10, as at least one type of three-dimensional shaped-article manufacturing composition 1B', a three-dimensional shaped-article manufacturing composition of the invention which satisfies the following conditions is used.

The three-dimensional shaped-article manufacturing composition 1B' of the invention is a three-dimensional shaped-article manufacturing composition to be used for the manufacturing of the three-dimensional shaped article and includes a plurality of shaped-article forming grains forming a substantive portion of the three-dimensional shaped article, a void forming material forming the voids 3 in the three-dimensional shaped article, a solvent dispersing the shaped-article forming grains and the void forming material, and a binder dissolved in the solvent, and the content of the void forming material with respect to 100 parts by volume of the shaped-article forming grains is 5 to 50 parts by volume.

Accordingly, there can be provided a three-dimensional shaped-article manufacturing composition which can be used for manufacturing of the three-dimensional shaped article having a preferably adjusted density.

On the other hand, when the above conditions are not satisfied, the excellent effect as described above may not be obtained. For example, when the three-dimensional shaped-article manufacturing composition contains no void forming material, a three-dimensional shaped article having a relatively low density is difficult to manufacture. In addition, even if a three-dimensional shaped article having a relatively low density can be formed, unfavorable variation of the void rate is liable to be generated in each portion, and the shape of the void is difficult to control, so that the shape stability and the mechanical strength of the three-dimensional shaped article cannot be sufficiently improved. In addition, even if the three-dimensional shaped-article manufacturing composition contains the void forming material, when the content thereof is less than the lower limit described above, the three-dimensional shaped article having a relatively low density as described above is difficult to manufacture. In addition, when the content of the void forming material is more than the upper limit described above, the shape stability in the manufacturing of the three-dimensional shaped article is rapidly degraded, and the dimensional accuracy of the three-dimensional shaped article to be obtained is remarkably degraded. In addition, the shape stability and the mechanical strength of the three-dimensional shaped article are rapidly degraded.

Although the content of the void forming material with respect to 100 parts by volume of the shaped-article forming grains may be 5 to 50 parts by volume, the content is preferably 10 to 47 parts by volume and more preferably 15 to 45 parts by volume.

Accordingly, the effect as described above can be significantly obtained.

### SHAPED-ARTICLE FORMING GRAINS

The three-dimensional shaped-article manufacturing composition 1B' is used for the formation of the substantive portion 2 of the three-dimensional shaped article 10.

Since the three-dimensional shaped-article manufacturing composition 1B' contains the shaped-article forming grains, the range of selection of a constituent material of the three-dimensional shaped article 10 can be increased, and a three-dimensional shaped article 10 having desired physical characteristics, texture, and the like can be preferably obtained. For example, when the three-dimensional shaped article is formed using a material dissolved in a solvent, the material to be used is limited, although since the three-dimensional shaped-article manufacturing composition 1B' containing the shaped-article forming grains is used, the restriction as described above can be eliminated.

As the constituent material of the shaped-article forming grains contained in the three-dimensional shaped-article manufacturing composition 1B', for example, a metal material, a metal compound (such as a ceramic), a resin material, and/or a pigment may be mentioned.

The three-dimensional shaped-article manufacturing composition 1B' preferably contains shaped-article forming grains formed of a material including at least one of a metal material and a ceramic material.

Accordingly, for example, the texture (high quality feeling), the mechanical strength, the durability, and the like of the three-dimensional shaped article 10 can be further improved. In addition, those materials have, in general, a sufficient shape stability at a temperature at which the binder and the void forming material are removed (that is, at a treatment temperature in the degreasing/void forming step). Hence, in the manufacturing step of the three-dimensional shaped article 10, the binder and the void forming material can be reliably removed, and the voids 3 can be preferably formed in the three-dimensional shaped article 10. Furthermore, the binder and the void forming material can be more reliably prevented from remaining, and the dimensional accuracy of the three-dimensional shaped article 10 can be further improved.

In particular, when the shaped-article forming grains are formed of a material including a metal material, the high quality feeling, massive feeling, mechanical strength, toughness, and the like of the three-dimensional shaped article 10 can be particularly improved. In addition, since the heat conduction is efficiently performed when energy for bonding between the shaped-article forming grains is applied, while the productivity of the three-dimensional shaped article 10 is particularly improved, unfavorable variation in temperature of each portion can be more effectively prevented, and the reliability of the three-dimensional shaped article 10 can be particularly improved.

As the metal material forming the shaped-article forming grains, for example, there may be mentioned magnesium, iron, copper, cobalt, titanium, chromium, nickel, or an alloy (such as maraging steel, stainless steel, cobalt-chromium-molybdenum, a titanium alloy, a nickel-based alloy, or an aluminum alloy) containing at least one of the elements mentioned above.

As the metal compound forming the shaped-article forming grains, for example, there may be mentioned various metal oxides, such as silica, alumina, titanium oxide, zinc oxide, zircon oxide, tin oxide, magnesium oxide, and potassium titanate; various metal hydroxides, such as magnesium hydroxide, aluminum hydroxide, and calcium hydroxide; various metal nitrides, such as silicon nitride, titanium nitride, and aluminum nitride; various metal carbides, such as silicon carbide and titanium carbide; various metal sulfides, such as zinc sulfide; various metal carbonates, such as calcium carbonate and magnesium carbonate; various metal sulfates, such as calcium sulfate and magnesium sulfate; various metal silicates, such as calcium silicate and magnesium silicate; various metal phosphates, such as calcium phosphate; various metal borates such as aluminum borate and magnesium borate; and composite compounds of the compounds mentioned above.

As the resin material forming the shaped-article forming grains, for example, there may be mentioned a poly(butylene terephthalate), a poly(ethylene terephthalate), a polypropylene, a polystyrene, a syndiotactic polystyrene, a polyacetal, a modified poly(phenylene ether), a poly(ether ether ketone), a polycarbonate, a acrylonitrile-butadienestyrene copolymer (ABS resin), a poly(ether nitrile), a polyamide (such as a nylon), a polyarylate, a poly(amide imide), a poly(ether imide), a polyimide, a liquid crystal polymer, a polysulfone, a poly(ether sulfone), a poly(phenylene sulfide), or a fluorinated resin.

The shape of the shaped-article forming grains is not particularly limited, and any shape, such as a spherical, a spindle, a needle, a cylindrical, or a flake shape, or an irregular shape may be used; however, a spherical shape is preferably used.

Although not particularly limited, the volume average grain diameter of the shaped-article forming grains is preferably 1 to 50 µm and more preferably 2 to 40 µm.

Accordingly, the fluidity of the three-dimensional shaped-article manufacturing composition 1B' can be made more preferable, the second-pattern forming step can be more smoothly performed, and at the same time, the bonding between the shaped-article forming grains in the bonding step can be more preferably performed. In addition, for example, the solvent, the binder, the void forming material, and the like contained in the layer 1 can be more efficiently removed, and constituent materials other than the shaped-article forming grains can be more effectively prevented from unfavorably remaining in the final three-dimensional shaped article 10. Accordingly, while the productivity of the three-dimensional shaped article 10 is further improved, the reliability and the mechanical strength of the three-dimensional shaped article 10 to be manufactured can be further improved, the generation of unfavorable irregularities in the three-dimensional shaped article 10 to be manufactured and the like can be effectively prevented, and the dimensional accuracy of the three-dimensional shaped article 10 can be further improved.

In addition, in the invention, the average grain diameter is a volume-based average grain diameter and can be obtained, for example, in such a way that after a sample is added to methanol and then dispersed therein for 3 minutes by an ultrasonic dispersion device, the dispersion thus obtained is measured by a coulter-counter method grain size distribution measurement device (TA-II type manufactured by Coulter Electronics Ins.) using an aperture of 50 µm.

Dmax of the shaped-article forming grains is preferably 1.5 to 55 µm and more preferably 2.5 to 45 µm.

Accordingly, the fluidity of the three-dimensional shaped-article manufacturing composition 1B' can be made more preferable, the second-pattern forming step can be more smoothly performed, and at the same time, the bonding between the shaped-article forming grains in the bonding step can be more preferably performed. As a result, while the productivity of the three-dimensional shaped article 10 is further improved, the mechanical strength of the three-dimensional shaped article 10 to be manufactured can be further improved, the generation of unfavorable irregularities in the three-dimensional shaped article 10 to be manufactured and the like can be effectively prevented, and the dimensional accuracy of the three-dimensional shaped article 10 can be further improved.

The content of the shaped-article forming grains in the three-dimensional shaped-article manufacturing composition 1B' is preferably 30 to 93 percent by mass and more preferably 35 to 88 percent by mass.

Accordingly, while the handling property of the three-dimensional shaped-article manufacturing composition 1B' is further improved, the amount of a component to be removed in the manufacturing step of the three-dimensional shaped article 10 can be further decreased, and various advantages, for example, in view of the productivity, the production cost, and the resource saving of the three-dimensional shaped article 10 can be particularly obtained. In addition, the dimensional accuracy of the three-dimensional shaped article 10 to be finally obtained can be further improved.

In addition, in the manufacturing step (such as the bonding step) of the three-dimensional shaped article 10, the shaped-article forming grains are formed of a material which performs a chemical reaction (such as an oxidation reaction), and the composition of the shaped-article forming grains contained in the three-dimensional shaped-article manufacturing composition 1B' may be different from the composition of the constituent material of the final three-dimensional shaped article 10.

In addition, the three-dimensional shaped-article manufacturing composition 1B' may contain at least two types of shaped-article forming grains.

### SOLVENT

Since the three-dimensional shaped-article manufacturing composition 1B' contains the solvent, the shaped-article forming grains and the void forming material can be preferably dispersed in the three-dimensional shaped-article manufacturing composition 1B', and the ejection thereof can be stably performed by a dispenser or the like.

As long as having a function (function as a dispersion medium) of dispersing the shaped-article forming grains and the void forming material in the three-dimensional shaped-article manufacturing composition 1B', the solvent is not particularly limited, and for example, there may be mentioned water; a polyalkylene glycol monoalkyl ether, such as ethylene glycol monomethyl ether, ethylene glycol monoethyl ether, propylene glycol monomethyl ether, or polypropylene glycol monoethyl ether; an acetate, such as ethyl acetate, n-propyl acetate, isopropyl acetate, n-butyl acetate, or iso-butyl acetate; a carbitol, such as carbitol or its ester compound (such as carbitol acetate); a cellosolve, such as cellosolve or its ester compound (such as cellosolve acetate); an aromatic hydrocarbon, such as benzene, toluene, or xylene; a ketone, such as methyl ethyl ketone, acetone, methyl isobutyl ketone, ethyl n-butyl ketone, diisopropyl ketone, or acetyl acetone; an alcohol, such as ethanol, propanol, or butanol; a sulfoxide-based solvent, such as dimethyl sulfoxide or diethyl sulfoxide; a pyridine-based solvent, such as pyridine, picoline, or 2,6-lutidine; or an ionic liquid such as a tetraalkyl ammonium acetate (such as tetrabutyl ammonium acetate). Those compounds mentioned above may be used alone, or at least two types thereof may be used in combination.

When the three-dimensional shaped-article manufacturing composition 1B' contains shaped-article forming grains formed of a metal material, as the solvent, an aprotic solvent is preferably used. Accordingly, an unfavorable oxidation reaction and the like of the constituent material of the shaped-article forming grains can be effectively prevented.

The content of the solvent in the three-dimensional shaped-article manufacturing composition 1B' is preferably 5 to 68 percent by mass and more preferably 8 to 60 percent by mass.

Accordingly, while the handling property of the three-dimensional shaped-article manufacturing composition 1B' is further improved, the amount of the component to be removed in the manufacturing step of the three-dimensional shaped article 10 can be further decreased, and advantages, for example, in view of the productivity, the production cost, and the resource saving of the three-dimensional shaped article 10 can be particularly obtained. In addition, the dimensional accuracy of the three-dimensional shaped article 10 to be finally obtained can be further improved.

### BINDER

The binder has a function to temporarily bond the shaped-article forming grains and the void forming material in the layer 1 (second pattern 1B) after the solvent is removed.

Since the binder as described above is contained, for example, unfavorable deformation of the second pattern 1B formed using the three-dimensional shaped-article manufacturing composition 1B' can be more effectively prevented. As a result, the dimensional accuracy of the three-dimensional shaped article 10 can be further improved.

As the binder, in the three-dimensional shaped-article manufacturing composition 1B' before the degreasing/void forming step is performed (that is, in the second pattern 1B), a material having a function to temporarily fix the shaped-article forming grains and the void forming material may be used, and for example, various resin materials, such as a thermoplastic resin and a curable resin, may be used.

When a curable resin is contained, at a timing after the ejection of the three-dimensional shaped-article manufacturing composition 1B' and before the bonding step, a curing reaction of the curable resin may be performed.

Accordingly, unfavorable deformation of the pattern formed using the three-dimensional shaped-article manufacturing composition 1B' can be more effectively prevented, and the dimensional accuracy of the three-dimensional shaped article 10 can be further improved.

A curing treatment to promote a curing reaction of the curable resin may be performed, for example, by heating or irradiation of energy rays, such as ultraviolet rays.

As the curable resin, for example, various thermosetting resins and photocurable resins may be used.

As the curable resin (polymerizable compound), although various monomers, various oligomers (including a dimer, a trimer, and/or the like), prepolymers, and/or the like may be used, the three-dimensional shaped-article manufacturing composition 1B' preferably contains at least a monomer component as a curable resin (polymerizable compound). Since a monomer is, in general, a low viscous component as compared to an oligomer component or the like, the ejection stability of the curable resin (polymerizable compound) can be advantageously further improved.

As the curable resin (polymerizable resin), there may be preferably used a resin which starts an addition reaction or a ring-opening reaction by radical or cation species generated from a polymerization initiator upon irradiation of energy rays and which forms a polymer. As a polymerization style of the addition reaction, for example, a radical, a cationic, an anionic, a metathesis, or a coordination polymerization may be mentioned. In addition, as a polymerization style of the ring-opening reaction, a cationic, an anionic, a radical, a metathesis, or a coordination polymerization may be mentioned.

The three-dimensional shaped-article manufacturing composition 1B' may contain, as the curable resin (polymerizable compound), for example, an oligomer (including a dimer, a trimer, and/or the like), and/or a prepolymer besides a monomer.

In the three-dimensional shaped-article manufacturing composition 1B', the binder is contained in a state dissolved in the solvent described above.

Accordingly, the binder may function as a dispersing medium dispersing the shaped-article forming grains and the void forming material, and hence, the ejection property of the three-dimensional shaped-article manufacturing composition 1B' can be improved.

A decomposition temperature (in the case of a curable resin, a decomposition temperature in a cured state) of the binder is preferably lower than the decomposition temperature and the sublimation temperature of the void forming material.

Accordingly, in the degreasing/void forming step, before the void forming material is removed, the binder can be removed, and the formation of the voids 3 can be more preferably controlled.

The content of the binder in the three-dimensional shaped-article manufacturing composition 1B' is preferably 0.1 to 48 percent by mass and more preferably 0.5 to 10 percent by mass.

Accordingly, while the fluidity of the three-dimensional shaped-article manufacturing composition 1B' in the second-pattern forming step is more appropriately improved, the function of temporarily fixing the shaped-article forming grains and the void forming material by the binder can be more effectively obtained. In addition, the binder can be more reliably removed in the degreasing/void forming step. Accordingly, while the productivity of the three-dimensional shaped article 10 is further improved, the dimensional accuracy and the reliability of the three-dimensional shaped article 10 to be manufactured can be further improved.

### VOID FORMING MATERIAL

The void forming material has a function of forming the voids 3 in the three-dimensional shaped article 10 and is contained in the three-dimensional shaped-article manufacturing composition 1B' at a predetermined rate with respect to the shaped-article forming grains.

Accordingly, a three-dimensional shaped-article manufacturing composition which can be used for manufacturing of the three-dimensional shaped article having a preferably adjusted density (void rate) can be provided.

In the three-dimensional shaped-article manufacturing composition 1B', the void forming material may have any shape, and for example, although the material may be in the form of fibers or the like, the material is more preferably in the form of grains.

Accordingly, the shape of the void 3 can be more appropriately formed, and unfavorable variation in distribution of the voids 3 in the three-dimensional shaped article 10 to be finally obtained can be more effectively prevented from being generated.

When the void forming material is formed of grains, the void forming material is preferably contained as a plurality of grains.

Accordingly, the effect described above can be more significantly obtained.

When the void forming material is formed of grains, as the shape of the grain, for example, a spherical, a spindle, a needle, a cylindrical, or a flake shape may be used, or an irregular shape may also be used; however, a spherical shape is preferably used.

Accordingly, the shape of the void 3 can be more preferably formed, and unfavorable variation in distribution of the voids 3 in the three-dimensional shaped article 10 to be finally obtained can be more effectively prevented from being generated.

When the void forming material is formed of grains, the average grain diameter of the void forming material is preferably equal to or larger than the average grain diameter of the shaped-article forming grains.

Accordingly, for example, the conditions (such as the void rate and the shape of the void 3) of the voids 3 of the three-dimensional shaped article 10 can be more preferably controlled. For example, the voids 3 in the three-dimensional shaped article 10 can be more reliably formed as preferable continuous holes.

When the average grain diameter of the shaped-article forming grains is represented by D1 [µm], and the average grain diameter of the void forming material is represented by D2 [µm], the relationship of 1.0≤D2/D1≤15 is preferably satisfied, and the relationship of 1.1≤D1/D2≤10 is more preferably satisfied.

Accordingly, the dimensional accuracy and the stability of the shape of the three-dimensional shaped article 10 are further improved, and while the mechanical strength is more effectively prevented from being decreased, for example, the conditions (such as the void rate and the shape of the void 3) of the voids 3 of the three-dimensional shaped article 10 can be more preferably controlled.

When the void forming material is formed of grains, the average grain diameter of the void forming material is preferably 1 to 50 µm and more preferably 3 to 45 µm.

Accordingly, voids 3 having preferable conditions can be more reliably formed. In addition, the fluidity of the three-dimensional shaped-article manufacturing composition 1B' can be made more preferable, the second-pattern forming step can be more smoothly performed, and at the same time, the formation of the voids 3 in the degreasing/void forming step can be more preferably performed. In addition, for example, the solvent, the binder, and the like contained in the layer 1 can be efficiently removed, and the constituent materials other than the shaped-article forming grains can be more effectively prevented from unfavorably remaining in the final three-dimensional shaped article 10. Accordingly, while the productivity of the three-dimensional shaped article 10 is further improved, the reliability and the mechanical strength of the three-dimensional shaped article 10 to be manufactured can be further improved, the generation of unfavorable irregularities in the three-dimensional shaped article 10 to be manufactured and the like can be more effectively prevented, and the dimensional accuracy of the three-dimensional shaped article 10 can be further improved.

When the void forming material is removed in the degreasing/void forming step by decomposition or sublimation of the void forming material, the decomposition temperature or the sublimation temperature is preferably 80°C to 700°C and more preferably 100°C to 500°C.

Accordingly, while the productivity of the three-dimensional shaped article 10 is further improved, the reliability of the three-dimensional shaped article 10 to be finally obtained can be further improved.

The constituent material of the void forming material may be selected in consideration of the constituent materials of the binder, the shaped-article forming grains, and the like, and for example, when the shaped-article forming grains are formed of a high melting point material (material having a particularly low vapor pressure), such as alumina, as the void forming material, for example, silica (material having a relatively high vapor pressure) may be used; however, the void forming material preferably includes at least one type selected from the group consisting of a polyamide, a poly(phenylene sulfide), a polyimide, and a poly(amide imide).

Accordingly, while unfavorable deformation, degradation, and the like of the void forming material are effectively prevented, for example, during the storage of the three-dimensional shaped-article manufacturing composition 1B', in the degreasing/void forming step, the void forming material can be easily and reliably removed at a relatively low temperature, and the productivity of the three-dimensional shaped article 10 can be further improved. In addition, since being easily available, those materials are advantageously used in view of stable manufacturing of the three-dimensional shaped article 10.

### OTHER COMPONENTS

In addition, the three-dimensional shaped-article manufacturing composition 1B' may also contain components other than those mentioned above. As the components mentioned above, for example, there may be mentioned a polymerization initiator, a dispersant, a surfactant, a thickening agent, an aggregation inhibitor, an antifoaming agent, a slip agent (leveling agent), a dye, a polymerization inhibitor, a polymerization promoter, a penetration enhancer, a wetting agent (moisturizing agent), a fixing agent, a fungicide, an antiseptic agent, an antioxidant, a UV absorber, an IR absorber, a chelating agent, and a pH adjuster.

### SUPPORT-PORTION FORMING COMPOSITION

Next, the support-portion forming composition 1A' functioning as the layer forming composition 1' used for manufacturing of the three-dimensional shaped article 10 will be described.

For example, constituent components of the support-portion forming composition 1A' are not particularly limited as long as they are usable to form the support portion 5 (formation of the first pattern 1A); however, a solvent and a plurality of grains (primary material grains) dispersed therein are preferably contained, and furthermore, a binder is also more preferably contained.

In the following description, the case in which the support-portion forming composition 1A' contains grains, a solvent, and a binder will be representatively described.

### GRAINS

Since the support-portion forming composition 1A' contains the grains, even if the support portion 5 (first pattern 1A) to be formed has a fine shape or the like, the support portion 5 can be efficiently formed with a high dimensional accuracy. In addition, from spaces between the grains forming the support portion 5, the solvent and the binder (including decomposed products) can be efficiently removed, and the productivity of the three-dimensional shaped article 10 can be further improved. In addition, the solvent, the binder, and the like can be more effectively prevented from unfavorably remaining in the degreased body 70, and the reliability of the three-dimensional shaped article 10 to be finally obtained can be further improved.

As constituent materials of the grains contained in the support-portion forming composition 1A', for example, constituent materials similar to those described as the constituent materials of the three-dimensional shaped-article manufacturing composition 1B' may be mentioned. Accordingly, an effect similar to that described above can be obtained.

However, the grains forming the support-portion forming composition 1A' are preferably formed of a material having a melting point higher than that of the grains forming the three-dimensional shaped-article manufacturing composition 1B'.

The shape of the grain is not particularly limited, and any shape, such as a spherical, a spindle, a needle, a cylindrical, or a flake shape, may be used, or an irregular shape may also be used; however, a spherical shape is preferable.

Although not particularly limited, the average grain diameter of the grains is preferably 1 to 50 µm and more preferably 2 to 40 µm, measured in the same way as above.

Accordingly, the fluidity of the support-portion forming composition 1A' can be made more preferable, and the first-pattern forming step can be more smoothly performed. In addition, from the spaces between the grains forming the support portion 5 (first pattern 1A), the solvent and the binder (including decomposed products) can be more efficiently removed, and the productivity of the three-dimensional shaped article 10 can be further improved. In addition, the solvent, the binder, and the like can be more effectively prevented, for example, from unfavorably remaining in the degreased body 70, and the reliability of the three-dimensional shaped article 10 to be finally obtained can be further improved. In addition, the dimensional accuracy of the three-dimensional shaped article 10 can be further improved.

Dmax of the grains is preferably 1.5 to 55 µm and more preferably 2.5 to 45 µm.

Accordingly, the fluidity of the support-portion forming composition 1A' can be made more preferable, and the supply of the support-portion forming composition 1A' can be more smoothly performed. In addition, from the spaces between the grains forming the support portion 5 (first pattern 1A), the solvent and the binder (including decomposed products) can be more efficiently removed, and the productivity of the three-dimensional shaped article 10 can be further improved. In addition, the solvent, the binder, and the like can be more effectively prevented, for example, from unfavorably remaining in the degreased body 70, and the reliability of the three-dimensional shaped article 10 to be finally obtained can be further improved. In addition, the dimensional accuracy of the three-dimensional shaped article 10 can be further improved.

The content of the grains in the support-portion forming composition 1A' is preferably 30 to 93 percent by mass and more preferably 35 to 88 percent by mass.

Accordingly, while the handling property of the support-portion forming composition 1A' is further improved, the amount of a component to be removed in the manufacturing step of the three-dimensional shaped article 10 can be further decreased, and advantages, for example, in view of the productivity, the production cost, and the resource saving of the three-dimensional shaped article 10 can be particularly obtained. In addition, the dimensional accuracy of the three-dimensional shaped article 10 to be finally obtained can be further improved.

In addition, the support-portion forming composition 1A' may contain at least two types of grains.

### SOLVENT

Since the support-portion forming composition 1A' contains the solvent, the grains can be preferably dispersed in the support-portion forming composition 1A', and the ejection thereof by a dispenser or the like can be stably performed.

As the solvent contained in the support-portion forming composition 1A', for example, solvents similar to those described as the constituent materials of the three-dimensional shaped-article manufacturing composition 1B' may be mentioned. Accordingly, an effect similar to that described above may be obtained.

In addition, the composition of the solvent contained in the support-portion forming composition 1A' may be the same as that of the solvent contained in the three-dimensional shaped-article manufacturing composition 1B' or may be different therefrom.

The content of the solvent in the support-portion forming composition 1A' is preferably 5 to 68 percent by mass and more preferably 8 to 60 percent by mass.

Accordingly, while the handling property of the support-portion forming composition 1A' is further improved, the amount of the component to be removed in the manufacturing step of the three-dimensional shaped article 10 can be further decreased, and advantages, for example, in view of the productivity, the production cost, and the resource saving of the three-dimensional shaped article 10 can be particularly obtained. In addition, the dimensional accuracy of the three-dimensional shaped article 10 to be finally obtained can be further improved.

### BINDER

The binder has a function to temporarily fix the grains to each other in the layer 1 (first pattern 1A) in the state in which the solvent is removed.

Since the binder as described above is contained, for example, unfavorable deformation of the first pattern 1A formed using the support-portion forming composition 1A' can be more effectively prevented. As a result, the dimensional accuracy of the three-dimensional shaped article 10 can be further improved.

As the binder, there may be used a material having a function to temporarily fix the grains in the support-portion forming composition 1A' (that is, in the first pattern 1A) before the degreasing/void forming step is performed, and for example, various resin materials, such as a thermoplastic resin and a curable resin, may be used.

When a curable resin is contained, at a timing after the ejection of the support-portion forming composition 1A' and before the bonding step, a curing reaction of the curable resin may be performed.

Accordingly, unfavorable deformation of the pattern formed using the support-portion forming composition 1A' can be more effectively prevented, and the dimensional accuracy of the three-dimensional shaped article 10 can be further improved.

A curing treatment promoting the curing reaction of the curable resin may be performed, for example, by heating and/or irradiation of energy rays, such as UV rays.

When the support-portion forming composition 1A' contains a curable resin, as this curable resin, for example, a resin similar to that described as the constituent component of the three-dimensional shaped-article manufacturing composition 1B' may be used.

In addition, the curable resin contained in the support-portion forming composition 1A' and the curable resin contained in the three-dimensional shaped-article manufacturing composition 1B' may have the same conditions (such as the same composition) or different conditions from each other.

In the support-portion forming composition 1A', the binder is contained in a liquid form (such as a molten state or a dissolved state).

Accordingly, the binder is able to function as a dispersant dispersing the grains, and the ejection property of the support-portion forming composition 1A' can be further improved.

The content of the binder of the support-portion forming composition 1A' is preferably 0.1 to 48 percent by mass and more preferably 0.5 to 20 percent by mass.

Accordingly, while the fluidity of the support-portion forming composition 1A' is made more preferable in the first-pattern forming step, the function of temporarily fixing the grains by the binder can be more effectively obtained. In addition, the binder can be more reliably removed in the degreasing/void forming step. Hence, while the productivity of the three-dimensional shaped article 10 is further improved, the dimensional accuracy and the reliability of the three-dimensional shaped article 10 to be manufactured can be further improved.

### OTHER COMPONENTS

In addition, the support-portion forming composition 1A' may also contain components other than the components described above. As the components mentioned above, for example, there may be mentioned a polymerization initiator, a void forming material, a dispersant, a surfactant, a thickening agent, an aggregation inhibitor, a antifoaming agent, a slip agent (leveling agent), a dye, a polymerization inhibitor, a polymerization promoter, a penetration enhancer, a wetting agent (moisturizing agent), a fixing agent, a fungicide, an antiseptic agent, an antioxidant, a UV absorber, an IR absorber, a chelating agent, and a pH adjuster.

In particular, when the support-portion forming composition 1A' contains a void forming material, even in the case in which the change in volume of the second pattern 1B before and after the degreasing/void forming step is relatively large, the first pattern 1A may appropriately follow the change described above, so that the difference in volume change between the second pattern 1B and the first pattern 1A can be reduced. As a result, the dimensional accuracy and the like of the three-dimensional shaped article 10 to be finally obtained can be further improved.

When the support-portion forming composition 1A' contains a void forming material, this void forming material preferably satisfies conditions similar to those described in the column of the three-dimensional shaped-article manufacturing composition 1B'. Accordingly, an effect similar to that described above can be obtained.

In addition, the void forming material contained in the support-portion forming composition 1A' and the void forming material contained in the three-dimensional shaped-article manufacturing composition 1B' may have the same conditions (such as the same composition) or different conditions from each other.

### THREE-DIMENSIONAL SHAPED-ARTICLE MANUFACTURING APPARATUS

Next, a three-dimensional shaped-article manufacturing apparatus will be described.

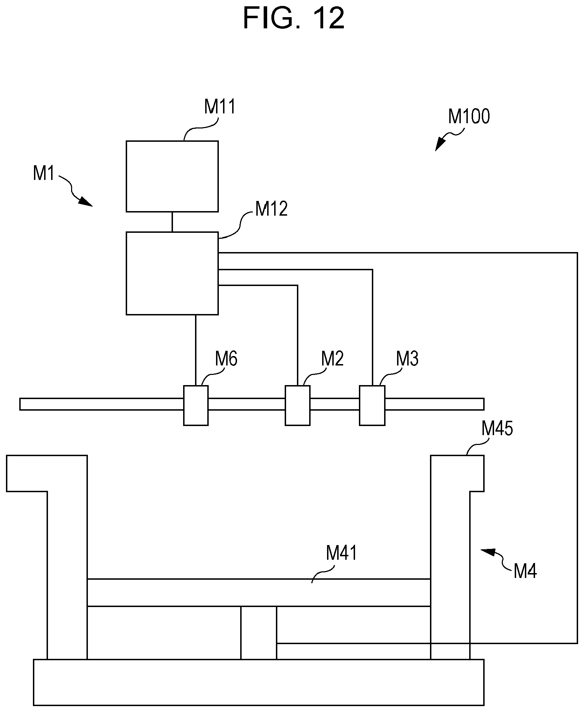

Fig. 12 is a cross-sectional view schematically showing a preferable embodiment of a three-dimensional shaped-article manufacturing apparatus.

A three-dimensional shaped-article manufacturing apparatus M100 is an apparatus which is to be used for manufacturing of the three-dimensional shaped article 10 by repeating the formation of the layer 1 and which includes a control portion (control device) M1, a support-portion forming composition ejection nozzle (first nozzle) M2 ejecting the support-portion forming composition 1A' to be used for the formation of the support portion 5 supporting the portion which is to be used as the substantive portion 2 of the three-dimensional shaped article 10, a three-dimensional shaped-article manufacturing composition ejection nozzle (second nozzle) M3 ejecting the three-dimensional shaped-article manufacturing composition 1B' to be used for the formation of the substantive portion 2 of the three-dimensional shaped article 10, and a solvent removing device M6 removing a solvent contained in the layer 1.

Accordingly, the manufacturing method of the invention as described above can be preferably performed, and the three-dimensional shaped article 10 having a preferably adjusted density can be manufactured with a good productivity.

The control portion M1 includes a computer M11 and a drive control portion M12.

The computer M11 is, for example, a general desktop computer including a CPU, a memory, and the like. The computer M11 converts the shape of the three-dimensional shaped article 10 into data functioning as model data, and this model data is sliced into thin cross-sections in parallel to each other and then output to the drive control portion M12 as cross-sectional data (slice data).

The drive control portion M12 of the control portion M1 functions as a control device driving the support-portion forming composition ejection nozzle M2, the three-dimensional shaped-article manufacturing composition ejection nozzle M3, a layer forming portion M4, the solvent removing device M6, and the like. In particular, for example, the drive control portion M12 controls the drive of the support-portion forming composition ejection nozzle M2 and the three-dimensional shaped-article manufacturing composition ejection nozzle M3, the ejection of the support-portion forming composition 1A' by the support-portion forming composition ejection nozzle M2, the ejection of the three-dimensional shaped-article manufacturing composition 1B' by the three-dimensional shaped-article manufacturing composition ejection nozzle M3, the fall distance of a stage (lifting stage) M41, and heating by the solvent removing device M6.

The layer forming portion M4 includes the stage (lifting stage) M41 to which the support-portion forming composition 1A' and the three-dimensional shaped-article manufacturing composition 1B' are supplied and which supports the layer 1 formed using the above two types of compositions, and a frame body M45 surrounding the lifting stage M41.

When a new layer 1 is formed on a layer 1 which is previously formed, the lifting stage M41 sequentially descends by a predetermined distance in response to the command from the drive control portion M12.

The surface (in more particular, a portion to which the support-portion forming composition 1A' and the three-dimensional shaped-article manufacturing composition 1B' are supplied) of the stage M41 is flat. Accordingly, a layer 1 having a highly uniform thickness can be easily and reliably formed.

The stage M41 is preferably formed of a material having a high strength. As a constituent material of the stage M41, for example, various metal materials, such as stainless steel, may be mentioned.

In addition, the surface of the stage M41 may be processed by a surface treatment. Accordingly, for example, the constituent material of the support-portion forming composition 1A' and the constituent material of the three-dimensional shaped-article manufacturing composition 1B' can be more effectively prevented from being tightly adhered to the stage M41, the durability of the stage M41 can be particularly improved, and the three-dimensional shaped article 10 can be stably produced for a longer period of time. As a material used for the surface treatment for the stage M41, for example, a fluorinated resin, such as a polytetrafluoroethylene, may be mentioned.

The support-portion forming composition ejection nozzle M2 is configured to move in response to the command from the drive control portion M12 and to form a predetermined pattern at a desired portion on the stage M41 by ejection of the support-portion forming composition 1A'.

As the support-portion forming composition ejection nozzle M2, for example, although an ink jet head nozzle and various dispenser nozzles may be mentioned, a dispenser nozzle is preferable.

Accordingly, for example, compared to the case in which the composition is ejected by an ink jet method or the like, the productivity of the three-dimensional shaped article 10 can be particularly improved. In addition, since a composition having a relatively high viscosity can be preferably ejected, the range of material selection can be increased.

Although not particularly limited, the size (nozzle diameter) of an ejection portion of the support-portion forming composition ejection nozzle M2 is preferably 10 to 100 µm.

Accordingly, while the dimensional accuracy of the three-dimensional shaped article 10 is further improved, the productivity of the three-dimensional shaped article 10 can be further improved.

The support-portion forming composition ejection nozzle M2 is preferably a nozzle which ejects the support-portion forming composition 1A' in the form of liquid droplets. Accordingly, the support-portion forming composition 1A' can be applied to form a fine pattern, and even if having a fine structure, the three-dimensional shaped article 10 can be manufactured with a particularly high productivity to have a particularly high dimensional accuracy.

The three-dimensional shaped-article manufacturing composition ejection nozzle M3 is configured to move in response to the command from the drive control portion M12 and to form a predetermined pattern at a desired portion on the stage M41 by ejecting the three-dimensional shaped-article manufacturing composition 1B'.

As the three-dimensional shaped-article manufacturing composition ejection nozzle M3, for example, although an ink jet head nozzle and various dispenser nozzles may be mentioned, a dispenser nozzle is preferable.

Accordingly, for example, compared to the case in which the composition is ejected by an ink jet method or the like, the productivity of the three-dimensional shaped article 10 can be particularly improved. In addition, since a composition having a relatively high viscosity can be preferably ejected, the range of material selection can be increased.

Although not particularly limited, the size (nozzle diameter) of an ejection portion of the three-dimensional shaped-article manufacturing composition ejection nozzle M3 is preferably 10 to 100 µm.

Accordingly, while the dimensional accuracy of the three-dimensional shaped article 10 is further improved, the productivity of the three-dimensional shaped article 10 can be further improved.

The three-dimensional shaped-article manufacturing composition ejection nozzle M3 is preferably a nozzle which ejects the three-dimensional shaped-article manufacturing composition 1B' in the form of liquid droplets. Accordingly, the three-dimensional shaped-article manufacturing composition 1B' can be applied to form a fine pattern, and even if having a fine structure, the three-dimensional shaped article 10 can be manufactured with a particularly high productivity to have a particularly high dimensional accuracy.

The solvent removing device M6 is a device having a function to remove, in response to the command from the drive control portion M12, the solvent contained in the layer 1 formed by the support-portion forming composition 1A' and the three-dimensional shaped-article manufacturing composition 1B'.

As the solvent removing device M6, for example, a heating device may be used.

By the structure as described above, the laminate 50 can be obtained by laminating a plurality of the layers 1.

When a degreasing/void forming treatment and a bonding treatment (sintering treatment) are performed on the laminate 50 thus obtained, the three-dimensional shaped article 10 can be obtained.

The three-dimensional shaped-article manufacturing apparatus M100 of this embodiment may include a degreasing/void forming device (not shown) which performs the degreasing/void forming treatment and a bonding device (sintering device) (not shown) which performs the bonding treatment (sintering treatment).

Accordingly, for example, the formation of the layer 1, the degreasing/void forming treatment, and the bonding treatment can be performed by the same apparatus, and the productivity of the three-dimensional shaped article 10 can be further improved.

### THREE-DIMENSIONAL SHAPED ARTICLE

The three-dimensional shaped article of the invention can be manufactured using the above three-dimensional shaped-article manufacturing composition of the invention, the manufacturing method of the invention, and the three-dimensional shaped-article manufacturing apparatus as described above.

Accordingly, the three-dimensional shaped article having a preferably adjusted density can be manufactured with an excellent productivity.

Although the application of the three-dimensional shaped article is not particularly limited, for example, appreciation objects/display objects, such as a doll and a figure, and medical devices, such as implants, may be mentioned.

In addition, the three-dimensional shaped article may also be applied to any one of a prototype, a mass-produced product, and a made-to-order product.

In addition, in the invention, since the void rate of the three-dimensional shaped article can be preferably increased, the surface area of the three-dimensional shaped article can be preferably increased. Hence, the three-dimensional shaped article of the invention may be preferably applied, for example, to a heat dissipation member (such as a fin) which is required to have a high heat dissipation property.

Heretofore, although the preferable embodiments of the invention have been described, the invention is not limited thereto.

For example, in the embodiment described above, although the case in which for the single layer, the second-pattern forming step is performed after the first-pattern forming step has been described, for the formation of at least one layer, the order of the first-pattern forming step and the second-pattern forming step may be opposite to that described above. In addition, to different regions, a plurality of types of compositions may be simultaneously applied.

In addition, in the embodiment described above, although the case in which for the single layer, after the first-pattern forming step and the second-pattern forming step are performed, the solvent removing step is performed has been representatively described, for example, the solvent removing step may be performed after the first-pattern forming step and after the second-pattern forming step, respectively.

In addition, in the embodiment described above, although the case in which for the formation of all the layers, the first pattern and the second pattern are formed has been representatively described, the laminate may include, for example, a layer having no first pattern and/or a layer having no second pattern. In addition, on a contact surface (topmost surface) of the stage, a layer having no substantive portion (such as a layer formed only from the support portion) may be formed, and this layer may be used as a sacrificial layer.

In addition, in the method for manufacturing a three-dimensional shaped article of the invention, the order of the steps and the treatments is not limited to that described above, and the order of at least some of those may be changed. For example, in the embodiment described above, although the case in which after the support-portion removing step is performed, the sintering step is performed has been representatively described, the support-portion removing step may be performed after the sintering step.

In addition, a plurality of steps may be simultaneously performed. For example, the layer forming step and the solvent removing step may be simultaneously performed.

In addition, the degreasing/void forming step and the sintering step may be sequentially performed for each layer. In this case, the bonding treatment for each layer can be more preferably performed, for example, by irradiation of laser light.

In addition, in the embodiment described above, although the case in which the degreasing/void forming step is performed as a single step has been primarily described, in the invention, the degreasing/void forming step may be separately performed by a plurality of steps, such as a degreasing step and a void forming step. In the case as described above, another step may be performed between the steps described above. For example, between the degreasing step and the void forming step, the support-portion removing step may be performed.

In addition, depending on the shape of the three-dimensional shaped article to be manufactured, the support portion may not be formed in some cases.

In addition, in the manufacturing method of the invention, if needed, a pre-treatment step, an intermediate treatment step, and/or a post-treatment step may be performed.

As the pre-treatment step, for example, a step of cleaning the stage may be mentioned.

As the post-treatment step, for example, there may be mentioned a cleaning step, a shape adjusting step in which, for example, flash removal is performed, a coloring step, a cover layer forming step, and a heat treatment step in which the bonding strength between the shaped-article forming grains is improved.

In addition, the three-dimensional shaped-article manufacturing composition of the invention may also be applied to a method for manufacturing a three-dimensional shaped article other than the lamination method.

In addition, in the embodiment described above, although the case in which the layer in direct contact with the surface of the stage is formed has been representatively described, for example, the three-dimensional shaped article may be manufactured in such a way that after a shape forming or other plate is disposed on the stage, the layer is laminated on this shape forming plate.

In addition, the method for manufacturing a three-dimensional shaped article of the invention is not limited to a method to be executed by the three-dimensional shaped-article manufacturing apparatus as described above.

### EXAMPLES

Hereinafter, although the invention will be described in more detail with reference to particular examples, the invention is not limited to those examples. In addition, in the following description, a treatment in which the temperature conditions are not particularly described is performed at room temperature (25°C). In addition, in various measurement conditions in which the temperature conditions are not particularly described, the measurement is performed at room temperature (25°C).

### 1. PREPARATION OF COMPOSITION

### Example 1

First, 78.5 parts by mass of a SUS 316 powder (average grain diameter: 3.0 µm) as shaped-article forming grains, 16.0 parts by mass of carbitol acetate as a solvent, 2.0 parts by mass of a polyamide (nylon 12) powder (average grain diameter: 4.0 µm) as a void forming material, and 3.5 parts by mass of a methacrylic-based resin as a binder were mixed together, so that a three-dimensional shaped-article manufacturing composition as a layer forming composition was obtained. The content of the void forming material with respect to 100 parts by volume of the shaped-article forming grains (SUS 316 powder) was 19.9 parts by volume.

In addition, 77.6 parts by mass of an alumina powder having an average grain diameter of 3.0 µm, 15.2 parts by mass of carbitol acetate as a solvent, 1.0 part by mass of a polyamide (nylon 12) powder (average grain diameter: 4.0 µm) as a void forming material, and 6.2 parts by mass of a methacrylate-based resin as a binder were mixed together, so that a support-portion forming composition as a layer forming composition was obtained. The content of the void forming material with respect to 100 parts by volume of the grains (alumina powder) was 19.9 parts by volume.

Accordingly, a composition set formed of the three-dimensional shaped-article manufacturing composition and the support-portion forming composition was obtained.

### 2. MANUFACTURING OF THREE-DIMENSIONAL SHAPED ARTICLE

By the use of the three-dimensional shaped-article manufacturing composition obtained as described above, a rectangular parallelepiped three-dimensional shaped article having design dimensions of 4 mm thick, 10 mm wide, and 80 mm long was manufactured as described below.

First, a three-dimensional shaped-article manufacturing apparatus as shown in Fig. 12 was prepared, and the support-portion forming composition was ejected in the form of a plurality of liquid droplets on a stage from a support-portion forming composition ejection nozzle functioning as a dispenser to form a predetermined pattern, so that a first pattern (support-portion pattern) was formed.

Next, the three-dimensional shaped-article manufacturing composition was ejected in the form of a plurality of liquid droplets on the stage from a three-dimensional shaped-article manufacturing composition ejection nozzle functioning as a dispenser to form a predetermined pattern, so that a second pattern (substantive-portion pattern) was formed.

Accordingly, a layer formed of the first pattern and the second pattern was formed. The thickness of the layer was 50 µm.

Subsequently, by a heater (heating device) functioning as a solvent removing device, the layer formed of the first pattern and the second pattern was heated at 200°C from an outer surface side, so that the solvent was removed from the layer.

Subsequently, a new layer forming step (a first-pattern forming step and a second-pattern forming step) and a solvent removing step were repeatedly performed on the layer from which the solvent was removed, so that a laminate having a shape corresponding to a three-dimensional shaped article to be manufactured was obtained.

Next, a degreasing/void forming treatment by heating at 500°C for 5 hours was performed on the laminate thus obtained in an argon gas atmosphere, so that a degreased body including voids was obtained.

Subsequently, the support portion was removed by a method of sweeping the support portion out of the degreased body using a brush.

Next, a sintering treatment (bonding treatment) by heating at 1,380°C for 2 hours in an argon gas atmosphere was performed on the degreased body from which the support portion was removed, so that a three-dimensional shaped article was obtained.

### EXAMPLES 2 AND 3

Except that the contents of components of a three-dimensional shaped-article manufacturing composition and a support-portion forming composition were set as shown in Table 1, as was the case of the above Example 1, a composition set (the three-dimensional shaped-article manufacturing composition and the support-portion forming composition) and a three-dimensional shaped article were manufactured.

### EXAMPLE 4

As a three-dimensional shaped-article manufacturing composition, two types of compositions, that is, a three-dimensional shaped-article manufacturing composition A and a three-dimensional shaped-article manufacturing composition B, were prepared, and in a second pattern, a region from the outer surface of a three-dimensional shaped article to be manufactured to a depth of 1 mm was formed from the three-dimensional shaped-article manufacturing composition A, and a region inside from the above region was formed from the three-dimensional shaped-article manufacturing composition B. Except for those described above, a three-dimensional shaped article was manufactured in a manner similar to that of the Example 1.

In addition, the three-dimensional shaped-article manufacturing composition A was the same as the three-dimensional shaped-article manufacturing composition used in Example 1, and the three-dimensional shaped-article manufacturing composition B was the same as the three-dimensional shaped-article manufacturing composition used in Example 2.

### COMPARATIVE EXAMPLE 1

Except that in preparation of a three-dimensional shaped-article manufacturing composition and a support-portion forming composition, no void forming material was used, and the contents of components of the above compositions were set as shown in Table 1, as was the case of the above Example 1, a composition set (the three-dimensional shaped-article manufacturing composition and the support-portion forming composition) and a three-dimensional shaped article were manufactured.

### COMPARATIVE EXAMPLES 2 AND 3

Except that the contents of components of a three-dimensional shaped-article manufacturing composition and a support-portion forming composition were set as shown in Table 1, as was the case of the above Example 1, a composition set (the three-dimensional shaped-article manufacturing composition and the support-portion forming composition) and a three-dimensional shaped article were manufactured.

As for the above examples and comparative examples, the contents of the components of the three-dimensional shaped-article manufacturing composition and the support-portion forming composition are collectively shown in Table 1. In addition, in Table 1, carbitol acetate, a methacrylic-based resin, and a polyamide (nylon 12) are represented by "CA", "PM", and "PA12", respectively. In addition, in the column showing the content of the void forming material by parts by volume in Table 1, as for the three-dimensional shaped-article manufacturing composition, the content with respect to 100 parts by volume of the shaped-article forming grains is shown, and as for the support-portion forming composition, the content with respect to 100 parts by volume of the grains is shown.

In addition, the viscosities of the support-portion forming composition and the three-dimensional shaped-article manufacturing composition used in the above examples and comparative examples were each in a range of 1,000 to 20,000 mPa·s. In addition, the volume per one liquid droplet of the support-portion forming composition and that of the three-dimensional shaped-article manufacturing composition used in the above examples and comparative examples were each in a range of 50 to 100 pL. In addition, the three-dimensional shaped articles of the above examples each had as the voids (pores), continuous holes communicating with the outside.

**[Table 1]**

| | Three-Dimensional Shaped-Article Manufacturing Composition | | | | | | | | Support-Portion Forming Composition | | | | | | | |
|---|---|---|---|---|---|---|---|---|---|---|---|---|---|---|---|---|
| | Shaped-Article Forming Grains | | Solvent | | Void Forming Material | | Binder | | Grains | | Solvent | | Void Forming Material | | Binder | |
| | Constituent Material | Content [Parts by Mass] | Constituent Material | Content [Parts by Mass] | Constituent Material | Content [Parts by Mass] | Constituent Material | Content [Parts by Mass] | Constituent Material | Content [Parts by Mass] | Constituent Material | Content [Parts by Mass] | Constituent Material | Content [Parts by Mass] | Constituent Material | Content [Parts by Mass] |
| | | | | | | Content [Parts by Volume] | | | | | | | | Content [Parts by Volume] | | |
| Example 1 | SUS316 | 78.5 | CA | 16.0 | PA12 | 2.0 | PM | 3.5 | Al₂O₃ | 77.6 | CA | 15.2 | PA12 | 1.0 | PM | 6.2 |
| | | | | | | 19.9 | | | | | | | | 19.9 | | |
| Example 2 | SUS316 | 78.0 | CA | 18.0 | PA12 | 0.5 | PM | 3.5 | Al₂O₃ | 78.0 | CA | 15.55 | PA12 | 0.25 | PM | 6.2 |
| | | | | | | 5.0 | | | | | | | | 5.0 | | |
| Example 3 | SUS316 | 78.5 | CA | 13.0 | PA12 | 5.0 | PM | 3.5 | Al₂O₃ | 77.6 | CA | 13.7 | PA12 | 2.5 | PM | 6.2 |
| | | | | | | 49.7 | | | | | | | | 49.7 | | |
| Example 4 | SUS316 | 78.5 | CA | 16.0 | PA12 | 2.0 | PM | 3.5 | Al₂O₃ | 77.6 | CA | 15.2 | PA12 | 1.0 | PM | 6.2 |
| | | | | | | 19.9 | | | | | | | | | | |
| | SUS316 | 78.0 | CA | 18.0 | PA12 | 0.5 | PM | 3.5 | Al₂O₃ | | | | | 19.9 | | |
| | | | | | | 5.0 | | | | | | | | | | |
| Comparative Example 1 | SUS316 | 78.5 | CA | 18.0 | - | - | PM | 3.5 | Al₂O₃ | 77.6 | CA | 16.2 | - | - | PM | 6.2 |
| | | | | | | - | | | | | | | | - | | |
| Comparative Example 2 | SUS316 | 78.0 | CA | 18.06 | PA12 | 0.44 | PM | 3.5 | Al₂O₃ | 78.0 | CA | 15.58 | PA12 | 0.22 | PM | 6.2 |
| | | | | | | 4.4 | | | | | | | | 4.4 | | |
| Comparative Example 3 | SUS316 | 78.0 | CA | 13.0 | PA12 | 5.5 | PM | 3.5 | Al₂O₃ | 78.0 | CA | 13.05 | PA12 | 2.75 | PM | 6.2 |
| | | | | | | 55.0 | | | | | | | | 55.0 | | |

### 3. EVALUATION

### 3.1 DIMENSIONAL ACCURACY

The thickness, the width, and the length of the three-dimensional shaped article of each of the above examples and comparative examples were measured, and the deviation from the design value was evaluated in accordance with the following criteria.
A: One of the thickness, the width, and the length having a largest deviation from the design value is less than 1.0%.
B: One of the thickness, the width, and the length having a largest deviation from the design value is 1.0% to less than 2.0%.
C: One of the thickness, the width, and the length having a largest deviation from the design value is 2.0% to less than 4.0%.
D: One of the thickness, the width, and the length having a largest deviation from the design value is 4.0% to less than 7.0%.
E: One of the thickness, the width, and the length having a largest deviation from the design value is 7.0% or more.

### 3.2 Void Rate

The void rate (pore rate) of the three-dimensional shaped article of each of the above examples and comparative examples was obtained by Archimedes method and was evaluated in accordance with the following criteria.
A: The void rate (pore rate) is 20 to less than 50 percent by volume.
B: The void rate (pore rate) is 15 to less than 52 percent by volume (however, the range A is excluded).
C: The void rate (pore rate) is 10 to less than 55 percent by volume (however, the ranges A and B are excluded).
D: The void rate (pore rate) is 7 to less than 60 percent by volume (however, the ranges A, B, and C are excluded).
E: The void rate (pore rate) is less than 7 percent by volume.

Those results are collectively shown in Table 2.

**[Table 2]**

| | Dimensional Accuracy | Void Rate |
|---|---|---|
| Example 1 | A | A |
| Example 2 | A | B |
| Example 3 | B | A |
| Example 4 | A | A |
| Comparative Example 1 | A | E |
| Comparative Example 2 | A | E |
| Comparative Example 3 | E | E |

As apparent from Table 2, according to the invention, the density and the void rate are preferably controlled (adjusted), and a three-dimensional shaped article having an excellent dimensional accuracy can be efficiently manufactured. On the other hand, in the comparative examples, satisfactory results cannot be obtained.

## Claims

1. A three-dimensional shaped-article manufacturing composition (1B') used for manufacturing of a three-dimensional shaped article (10), the composition comprising:
a plurality of shaped-article forming grains forming a substantive portion of the three-dimensional shaped article;
a void forming material forming voids in the three-dimensional shaped article;
a solvent dispersing the shaped-article forming grains and the void forming material; and
a binder dissolved in the solvent,
wherein the content of the void forming material is 5 to 50 parts by volume with respect to 100 parts by volume of the shaped-article forming grains.

2. The three-dimensional shaped-article manufacturing composition according to Claim 1, wherein the void forming material is in the form of grains.

3. The three-dimensional shaped-article manufacturing composition according to Claim 2, wherein the void forming material has an average grain diameter equal to or larger than that of the shaped-article forming grains.

4. The three-dimensional shaped-article manufacturing composition according to Claim 2 or Claim 3, wherein the average grain diameter of the void forming material is 1 to 50 µm.

5. The three-dimensional shaped-article manufacturing composition according to any one of the preceding claims, wherein the void forming material includes at least one type selected from the group consisting of a polyamide, a poly(phenylene sulfide), a polyimide, and a poly(amide imide).

6. The three-dimensional shaped-article manufacturing composition according to any one of the preceding claims, wherein the shaped-article forming grains include at least one of a metal material and a ceramic material.

7. A method for manufacturing a three-dimensional shaped article, the method comprising:
a layer forming step of forming a layer using the three-dimensional shaped-article manufacturing composition according to any one of the preceding claims;
a solvent removing step of removing the solvent contained in the layer; and
a degreasing/void forming step of forming voids by removing the binder and the void forming material contained in the layer.

8. The method for manufacturing a three-dimensional shaped article according to Claim 7, wherein the degreasing/void forming step includes a treatment which mainly aims to remove the binder and a treatment which mainly aims to remove the void forming material, and the treatments are performed as treatments different from each other.

9. The method for manufacturing a three-dimensional shaped article according to Claim 7 or Claim 8, wherein a series of steps including the layer forming step and the solvent removing step is repeatedly performed to form a laminate, and the degreasing/void forming step is performed on the laminate.

10. The method for manufacturing a three-dimensional shaped article according to according to any one of Claims 7 to 9, wherein the number of types of three-dimensional shaped-article manufacturing compositions is two or more.

11. The method for manufacturing a three-dimensional shaped article according to according to any one of Claims 7 to 10, further comprising after the degreasing/void forming step is performed: a bonding step of performing a bonding treatment to bond between the shaped-article forming grains.
